Europäisches Patentamt

European Patent Office

Office européen des brevets

(11) Veröffentlichungsnummer: **0 343 280 B1**

(19)

(12) **EUROPÄISCHE PATENTSCHRIFT**

(45) Veröffentlichungstag der Patentschrift: **16.12.92**

(21) Anmeldenummer: **88112439.0**

(22) Anmeldetag: **01.08.88**

(51) Int. Cl.⁵: **B29C 47/76**

(54) **Extrusionsverfahren und Ein-, Zwei- oder Mehrschneckenextruder.**

(30) Priorität: **27.05.88 DE 3817941**

(43) Veröffentlichungstag der Anmeldung:
**29.11.89 Patentblatt 89/48**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**CH-A- 613 150**
**DD-A- 23 027**
**DE-A- 2 744 077**
**US-A- 4 072 455**

(73) Patentinhaber: **RHONE-POULENC RHODIA AK-
TIENGESELLSCHAFT**
**Engesserstrasse 8 Postfach 1320**
**W-7800 Freiburg(DE)**

(72) Erfinder: **Dollhopf, Rüdiger, Dipl.-Ing.**
**Schwarzwaldstrasse 9**
**W-7834 Herbolzheim 5(DE)**
Erfinder: **Nandzik, Bernd, Dipl.-Ing. (FH)**
**Gundelfinger Weg 8**
**W-7803 Gundelfingen(DE)**

EP 0 343 280 B1

## Beschreibung

Die Erfindung betrifft ein Extrusionsverfahren mit Hilfe eines Ein-, Zwei- oder Mehrschneckenextruders, wonach das zu verarbeitende Material in Längsrichtung der Schnecke oder Schnecken zum Teil in eine Richtung A und zu einem anderen Teil in eine der Richtung A entgegengesetzte Richtung B geführt wird, wonach ferner das Extrusionsverfahren als Entgasungsextrusionsverfahren durchgeführt wird.

Die Erfindung betrifft außerdem einen Ein-, Zwei- oder Mehrschneckenextruder mit im wesentlichen

- respektive einer rotierbaren Schnecke, zwei rotierbaren Schnecken oder mehr als zwei rotierbaren Schnecken,
- einem Gehäuse, innerhalb dessen die Schnecke rotieren kann oder die Schnecken rotieren können,
- einem Antrieb,
- einem Getriebe,
- einer Materialeinfüllanordnung oder mehreren Materialeinfüllanordnungen und
- einer Materialaustragsanordnung oder mehreren Materialaustragsanordnungen, bei dem das Gewinde der Schnecke oder jeder der Schnecken zum Teil linksgängig und zum Teil rechtsgängig ist, wobei sich bei zwei oder mehr Schnecken - in Richtung der Querachse dieser Schnecken gesehen -
- die linksgängigen Abschnitte gegenüberliegen und die rechtsgängigen Abschnitte gegenüberliegen oder
- die linksgängigen Abschnitte gegenüber den rechtsgängigen Abschnitte befinden,

wobei der Extruder als Entgasungsextruder ausgebildet ist.

Bei den üblichen bekannten Extrusionsverfahren mit Ein-, Zwei- oder Mehrschneckenextrudern wird das zu verarbeitende Material in nur eine - axiale - Richtung, nämlich in Längsrichtung der Schnecke oder Schnecken vom Antrieb weg, gefördert bzw. geführt. Die dadurch entstehenden hohen axialen Rückstoßkräfte wirken alle in die gleiche Richtung, und zwar zum Getriebe hin. Um diese hohen Rückstoßkräfte bzw. den entsprechenden Druck aufzufangen, ist es notwendig, ein Lager (Axiallager) vorzusehen. Solche Axiallager benötigen viel Platz, insbesondere wenn es sich um solche handelt, die sehr hohe Rückstoßkräfte auffangen müssen. Bei Einschneckenextrudern, für die man als Axiallager beispielsweise - einfache - Kugel- oder Rollendrucklager oder für sehr hohe Druckbelastungen tandemartig angeordnete Rollenlager einsetzt, spielt der Platzbedarf solcher Lager keine so große Rolle, da wegen des Vorhandenseins von nur einer Schnecke im allgemeinen auch genügend Platz für das Lager zur Verfügung steht.

Jedoch verteuert selbstverständlich die Anordnung eines Axiallagers, insbesondere eines solchen, das hohe Druckbelastungen aufzunehmen hat, auch Einschneckenextruder erheblich. Bei Zwei- oder Mehrschneckenextrudern sind die Umstände konstruktionsbedingt wesentlich komplizierter, denn für die Anordnung eines einfachen Axiallagers fehlt durch das Vorhandensein von zwei oder mehr als zwei Schnecken zumeist der notwendige Platz; dieses ist der Grund, weshalb man bei Zwei- oder Mehrschneckenextrudern sehr aufwendige und teure Axiallager benötigt oder sehr aufwendige konische Schnecken und entsprechende Gehäuse baut, um den Achsabstand der Schnecken antriebsseitig zu vergrößern, womit Platz für ausreichend große und langlebigere Axiallager geschaffen wird.

Aus der US-Patentschrift 2 535 865 ist nun der Vorschlag bekannt, bei Zwei- oder Mehrschneckenextrudern jede der Schnecken mit einem linksgängigen Gewindeteil oder mehreren linksgängigen Gewindeteilen und einem rechtsgängigen Gewindeteil oder mehreren rechtsgängigen Gewindeteilen zu versehen. Bei einer solchen Anordnung ist es sogar möglich, die linksgängigen und rechtsgängigen Gewindeteile so zu gestalten, daß die dadurch in entgegengesetzte Richtungen auf jede der Schnecken wirkenden Axialkräfte sich gegenseitig aufheben bzw. ausgleichen, so daß keine Axialkräfte auf die Schnecken mehr wirken; dadurch kann man - so beschreibt es die US-Patentschrift 2 535 865 - sogar auf Axiallager verzichten. Ein solcher Extruder ist daher für den kontinuierlichen Betrieb geeignet.

Die US-Patentschrift 2 535 865 beschreibt das Prinzip "linksgängige und rechtsgängige Gewindeteile an einer Schnecke" zwar nur im Zusammenhang mit Zwei- oder Mehrschneckenextrudern, jedoch ist dieses Prinzip selbstverständlich auch anwendbar auf Einschneckenextruder.

Nachteilig ist beim aus der US-Patentschrift 2 535 865 bekannten Zwei- oder Mehrschneckenextruder jedoch, daß dieser nicht für die Entgasung von flüchtigen Bestandteilen aus insbesondere Polymerlösungen und -schmelzen und ganz besonders nicht für eine solche Entgasung, bei der keine Totzonen und/oder Abrißkanten entstehen, eingerichtet ist.

Beim Herstellen und Aufbereiten von Kunststoffen ist das Entgasen von flüchtigen Bestandteilen heute außerordentlich wichtig, und zwar

- aus Gründen der Rohstoff- und Energie-Einsparung,
- aus Qualitätsgründen, wie Verbesserung der mechanischen und optischen Eigenschaften, Herstellung von porenfreien Produkten und Verbesserung der Verarbeitbarkeit, sowie

- aus Gründen des Umweltschutzes und der Sicherheit.

Die meisten heute bekannten Entgasungsvorrichtungen an Ein-, Zwei- und Mehrschneckenextrudern haben den Nachteil daß an ihnen Abrißkanten und/oder Totzonen bestehen oder entstehen, an denen oder in denen das zu verarbeitende Material, z. B. eine Polymerschmelze, verweilen und somit z. B. oxydativ und/oder thermisch geschädigt werden kann; dieses ist dadurch bedingt, daß bei solchen bekannten Entgasungsvorrichtungen das Material unter der Entgasungsvorrichtung (z. B. einem Entgasungsstutzen) hindurchläuft bzw. an der Entgasungsvorrichtung entlangläuft.

Bei solchen bekannten, nicht im Dauerbetrieb eingesetzten Entgasungsextrudern muß die Entgasungsanordnung (die Entgasungsöffnung) häufig gereinigt werden. Dieses kann jedoch bei vollkontinuierlich arbeitenden Anlagen, wie Extrudern für das Erspinnen von synthetischen Fäden, nicht akzeptiert werden.

Nun ist zwar ein üblicher Extruder (i. e. ein Extruder, mit dem das zu verarbeitende Material in nur eine - axiale - Richtung vom Antrieb weg gefördert wird) mit einer sogenannten Rückwärts-Entgasungsanordnung am Schneckenanfang bekannt. Eine solche Rückwärts-Entgasungsanordnung, mit der die Dampf- oder Gasströme entgegen der Produktförderrichtung stromaufwärts von der Materialzugabestelle abgeführt werden, hat zwar den Vorteil, daß das zu verarbeitende Material nicht an ihr entlangläuft bzw. unter ihr hindurchläuft; sie hat jedoch andererseits den Nachteil, daß sie, insbesondere bei Zwei- oder Mehrschneckenextrudern, durch ihren Platz am Schneckenanfang sehr schlecht oder nur mit unverhältnismäßig hohem Aufwand gegen Gas- oder Dampfeintritt, besonders Sauerstoffeintritt, von außerhalb des Extruders abgedichtet werden kann.

Ein weitergehender Vorschlag ist in der US-Patentschrift 4 103 354 beschrieben; aus ihr sind ein Extrusionsverfahren und ein Einschneckenextruder zur Durchführung jenes Verfahrens bekannt, wonach/womit eine Rückwärtsentgasung an der Stelle zwischen den Abschnitten des Gewindes der Schnecke erfolgt, von wo das zu verarbeitende Material (in diesem Falle ein Nahrungsmittel, wie Fleisch zur Wurstherstellung) durch die Verwendung einer Schnecke mit einem zum Teil linksgängigen und zum Teil rechtsgängigen Förderstegewinde über diese Abschnitte in entgegengesetzte Richtungen entlang der Schnecke weggeführt wird. Mit diesem bekannten Verfahren soll vermieden werden, daß das zu verarbeitende Material durch von außerhalb des Extruders eindringende atmosphärische Luft geschädigt wird.

Der US 4 103 354 ist ferner zu entnehmen, daß eine Umgehungsleitung vorgesehen ist zur Überführung des zu verarbeitenden Materials vom Ende des Abschnitts der Schnecke, über den es in eine Richtung geführt wird, an den Anfang des nachfolgenden Abschnitts, über den es in eine entgegengesetzte Richtung geführt wird; dabei zeigt die US 4 103 354 das Vorhandensein von Drosselorganen in der Umgehungsleitung.

Mit dem Extruder gemäß US 4 103 354 läßt sich jedoch nicht vermeiden, daß während eines Stillstandes dieses Extruders in die Rückwärtsentgasungseinrichtung (über)gelaufenes und eventuell geschädigtes Material beim Wiederanfahren des Extruders nach dem Stillstand wieder in den Materialstrom gelangt; über einen Behälter zum Auffangen des zuvor erwähnten übergelaufenen Materials verfügt der Extruder gemäß US 4 103 354 ebenfalls nicht.

Ferner beschreibt die europäische Patentanmeldung 0 015 457 (EP 0 015 457 A1) zwar auch ein Entgasungs-Extrusionsverfahren mit Hilfe eines Zweischneckenextruders, wobei das Schneckengewinde zum Teil rechtsgängig und zum Teil linksgängig ist, jedoch ist die Entgasung keine Rückwärtsentgasung, also keine Entgasung, bei dem ein Wegführen des zu verarbeitenden Materials von der Entgasungsanordnung (zurück) entlang den Schnecken erfolgt; außerdem wird bei diesem bekannten Verfahren die Entgasung am Anfang der Schnecken vorgenommen - mit dem bereits zuvor erwähnten Nachteil. Auch gibt die EP 0 015 457 A1 keinen Hinweis auf die Anordnung eines Auffangbehälters - für die Entgasungseinrichtung - zum Auffangen des zu verarbeitenden Materials, das bei z.B. einem Stillstand des Extruders überläuft.

Ähnliches beschreibt das Dokument CH-A5-613 150, allerdings mit dem Unterschied, daß gemäß CH-A5-613 150 zwei Einschneckenextruder eingesetzt werden, von denen der erste den zweiten speist und der zweite die Entgasungsvorrichtung aufweist.

Auch aus der US-Patentschrift 3 459 840 ist ein Entgasungs-Extrusionsverfahren bekannt, das mit einer Schnecke mit teilweise linksgängigen und teilweise rechtsgängigen Abschnitten durchgeführt wird. Diese US 3 459 840 läßt die Anordnung eines Drosselungs- oder Stauungsabschnitts zwischen einem linksgängigen Schneckenabschnitt und einem rechtsgängigen Schneckenabschnitt erkennen. Ferner beschreibt die US 3 459 840 - ähnlich wie die US 4 103 354 - eine Umgehungsleitung zur Überführung des zu verarbeitenden Materials vom Ende des Abschnitts der Schnecke, über den es in eine Richtung geführt wird, zum Abschnitt der Schnekke, über des es in eine entgegengesetzte Richtung geführt wird; in der Umgehungsleitung sind Drosselorgane angeordnet.

Schließlich beschreibt die europäische Patentschrift 0 114 999 (EP 0 114 999 B1 ) eine Rückwärts-Entgasungseinrichtung an einem Schneckenextruder sowie einen Doppelwellen-Extruder mit einer solchen Entgasungseinrichtung. Nach der EP 0 114 999 B1 können die Schnecken aus mehreren Abschnitten bestehen, die sich durch unterschiedliche Förderrichtung unterscheiden können. Ferner zeigt die EP 0 114 999 B1 die Anordnung eines Beobachtungsfensters in der Wandung der Entgasungseinrichtung.

Die EP 0 114 999 B1 läßt jedoch - ebenfalls - keine Möglichkeit erkennen zum Auffangen des zu verarbeitenden Materials, das bei einem Stillstand des Extruders in die Entgasungseinrichtung eintritt. Außerdem würde auch beim Extruder gemäß EP 0 114 999 B1 das während eines solchen Stillstandes übergelaufene und eventuell geschädigte Material beim Wiederanfahren dieses Extruders nach dem Stillstand wieder in den Materialstrom gelangen.

Der Erfindung liegt die Aufgabe zugrunde, ein Extrusionsverfahren der eingangs genannten Gattung zur Verfügung zu stellen,

- mit dem auch beim vollkontinuierlichen Betrieb eine Entgasung von flüchtigen Bestandteilen aus dem zu verarbeitenden Material oder den zu verarbeitenden Materialien ohne - z.B. thermische und/oder oxydative - Schädigung dieses Materials oder dieser Materialien möglich ist;
- mit dem die Entgasung als Rückwärtsentgasung nicht nur an der Stelle zwischen den Abschnitten des Gewindes der Schnecke(n) erfolgen kann, an der das Extrusionsmaterial in zwei entgegengesetzte Richtungen weggeführt wird, sondern auch am Ende der Schnecke(n);
- mit dem insbesondere auch vermieden wird, daß während eines - störungsbedingten - Stillstandes des Extruders in die Rückwärtsentgasungsanordnung(en) übergelaufenes und eventuell geschädigtes Extrusionsmaterial beim Wiederanfahren des Extruders nach dem Stillstand wieder in den Materialstrom gelangt.

Das Verfahren soll somit nach einem solchen Stillstand ohne weitere zeitliche Verzögerung, ohne die Gefahr von Qualitätsminderung des Extrusionsmaterials und ohne die Notwendigkeit der Reinigung und der dadurch bedingten Zerlegung des Extruders wieder durchgeführt werden können.

Diese Aufgabe wird durch ein Verfahren mit den im Anspruch 1 angegebenen Merkmalen gelöst.

Der Erfindung liegt auch die Aufgabe zugrunde, einen Ein-, Zwei- oder Mehrschneckenextruder der eingangs genannten Gattung zu schaffen,

- der auch für den vollkontinuierlichen Betrieb geeignet ist und mit einer Entgasungsanordnung oder mehreren Entgasungsanordnungen versehen ist, die leicht gegen Dampfoder Gaseintritt, besonders Sauerstoffeintritt, von außen abzudichten ist bzw. sind und eine Entgasung ohne Totzonen und/oder Abrißkanten ermöglicht bzw. ermöglichen;
- bei dem die Entgasungsanordnung(en) als Rückwärtsentgasungsanordnung(en) ausgebildet ist bzw. sind, wobei eine solche Rückwärtsentgasungsanordnung nicht nur zwischen einem linksgängigen und einem rechtsgängigen Schneckenabschnitt, sondern auch am Ende der Schnecke(n) angeordnet sein kann;
- bei dem während eines Stillstandes in die Rückwärtsentgasungsanordnung(en) übergelaufenes und eventuell geschädigtes Extrusionsmaterial beim Wiederanfahren nach dem Stillstand nicht wieder in den Materialstrom gelangt.

Diese Aufgabe wird durch einen Ein-, Zwei- oder Mehrschneckenextruder mit den im Anspruch 2 angegebenen Merkmalen gelöst.

Vorteilhafte Ausführungsformen des erfindungsgemäßen Ein-, Zwei- oder Mehrschneckenextruders sind in den Ansprüchen 3 und 4 angegeben.

Die Erfindung weist folgende Vorteile auf:

- Sie kann - auch - für den vollkontinuierlichen Betrieb sowie zur Verarbeitung von thermisch und oxydativ empfindlichen Materialien eingesetzt werden;
- mit ihr können hohe Produktaustragsdrücke erzeugt werden, ohne die Lebensdauer der (Axial)lagerung zu verkürzen; der Einsatz spezieller Druckerhöhungspumpen kann entfallen;
- die Entgasungsbereiche sind frei von Totzonen und Abrißkanten, wodurch die Produktqualität positiv beeinflußt wird;
- ein erfindungsgemäßer Ein-, Zwei- oder Mehrschneckenextruder muß bei störungsfreiem Dauerbetrieb auch nach sehr langer Laufzeit nicht zur Reinigung, insbesondere der Entgasungsanordnung, abgestellt werden;
- ein erfindungsgemäßer Ein-, Zwei- oder Mehrschneckenextruder kann eine Vielzahl von störungsbedingten Stillständen ohne die Notwendigkeit der Reinigung, insbesondere der Entgasungsanordnung, überstehen; nach störungsbedingten Stillständen kann der Extruder ohne die Gefahr von Qualitätsminderung des zu verarbeitenden Materials problemlos wieder in Betrieb genommen werden;
- mit einem erfindungsgemäßen Ein-, Zwei- oder Mehrschneckenextruder können verschiedene Materialien wie verschiedene Polymere, verarbeitet werden;

- für einen erfindungsgemäßen Ein-, Zwei- oder Mehrschneckenextruder ist - durch die Verringerung oder gar Aufhebung der Axialkräfte - lediglich eine einfache und damit kostengünstige Axiallagerung und somit ein preisgünstiges Getriebe notwendig, das zudem eine hohe Laufzeit hat;

- mit einem erfindungsgemäßen Ein-, Zwei- oder Mehrschneckenextruder ist es möglich, die Schnecke oder Schnecken Zug- statt Druckkräften auszusetzen; damit wird die Schnecke oder werden die Schnecken nicht mehr auf Ausknicken beansprucht, was sich besonders bei einem sehr langen Extruder vorteilhaft auswirkt.

Wenn das erfindungsgemäße Extrusionsverfahren mit Hilfe eines Zwei- oder Mehrschneckenextruders durchgeführt wird und wenn es sich beim erfindungsgemäßen Extruder um einen Zwei- oder Mehrschneckenextruder handelt, kann das Schneckensystem

- bezüglich seines Drehsinns gleichläufig oder gegenläufig
  und

- bezüglich der Anordnung der Schnecken nicht kämmend (nicht ineinandergreifend) kämmend (partiell ineinandergreifend) oder dicht kämmend (dicht ineinandergreifend)

sein.

Das erfindungsgemäße Extrusionsverfahren und der erfindungsgemäße Ein-, Zwei- oder Mehrschneckenextruder eignen sich beispielsweise

- zum Plastifizieren und Homogenisieren von Kunststoff-Formmassen,

- für das Extrudieren von Kunststoff-Halbzeug oder von Polymerisatfäden
  und

- zur Aufbereitungs- und Reaktionsextrusion, z. B. für das Aufbereiten von Lösungspolymerisaten.

Mit der Erfindung können z. B. Polyvinylchlorid, Polyester (wie Polyethylenterephthalat) Polyamide (wie Polyamid-66) und Polystyrol verarbeitet werden. Die Erfindung eignet sich insbesondere für die Verarbeitung von einem thermisch und oxydativ so empfindlichen Produkt wie Polyamid-66 (Nylon-66) und ganz besonders zum Extrusionsspinnen von Polyamid-66-Fäden.

Nach dem erfindungsgemäßen Extrusionsverfahren erfolgt die Rückwärtsentgasung

- am Ende der Schnecke oder Schnecken, wenn das zu verarbeitende Material von diesem Ende entlang der Schnecke oder Schnecken weggeführt wird,
  und/oder

- an der Stelle oder den Stellen zwischen den Abschnitten des Gewindes der Schnecke oder Schnecken, von wo das zu verarbeitende Material über diese Abschnitte in entgegengesetzte Richtungen entlang der Schnecke oder Schnecken weggeführt wird

und nach dem erfindungsgemäßen Ein-, Zwei- oder Mehrschneckenextruder ist eine Rückwärtsentgasungsanordnung vorgesehen

- am Ende der Schnecke oder Schnecken, wenn das zu verarbeitende Material von diesem Ende entlang der Schnecke oder Schnecken weggeführt wird,
  und/oder

- an der Stelle oder den Stellen zwischen den Abschnitten des Gewindes der Schnecke oder Schnecken, von wo das zu verarbeitende Material über diese Abschnitte in entgegengesetzte Richtungen entlang der Schnecke oder Schnecken weggeführt wird.

Dieses beinhaltet, daß das zu verarbeitende Material - auf Grund der Links- oder Rechtsgängigkeit eines Teils des Gewindes der Schnecke oder Schnecken sowie des Drehsinns der Schnecke oder Schnecken - in Längsrichtung der Schnecke oder Schnecken von der Entgasungsanordnung wegströmt, so daß kein unmittelbarer Kontakt zwischen Entgasungsanordnung und zu verarbeitendem Material stattfindet; die Entgasungsanordnung befindet sich also vor dem zu verarbeitenden Material.

Dadurch bestehen oder entstehen keine Totzonen oder Abrißkanten, so daß das zu verarbeitende Material nicht - z. B. thermisch und/oder oxydativ - geschädigt wird.

Die Erfindung wird nachstehend anhand der Zeichnungen näher erläutert.

Fig. 1 zeigt schematisch und im Schnitt einen erfindungsgemäßen Einschneckenextruder mit einer Rückwärtsentgasungsanordnung am Ende der Schnecke und einer im wesentlichen außerhalb des Gehäuses verlaufenden Umgehungsleitung;

Fig. 2 zeigt schematisch und im Schnitt einen erfindungsgemäßen Einschneckenextruder mit einer Rückwärtsentgasungsanordnung am Ende der Schnecke und einer durch das Gehäuse verlaufenden Umgehungsleitung;

Fig. 3 zeigt schematisch und im Schnitt einen erfindungsgemäßen Einschneckenextruder mit einer Rückwärtsentgasungsanordnung am Ende der Schnecke und einer durch die Schnecke Verlaufenden Umgehungsleitung;

Fig. 4 zeigt schematisch und im Schnitt einen erfindungsgemäßen Zweischneckenextruder mit einer Rückwärts-Entgasungsanordnung am Ende der Schnecken und einer im wesentlichen außerhalb des Gehäuses Verlaufenden Umgehungsleitung;

Fig. 5 zeigt schematisch und im Schnitt - gemäß der Erfindung - eine am Ende der Schnecken vorgesehene (Rückwärts-)Entgasungskammer, die

- in ihrer Wandung u. a. mit einem gegenüber dem Ende der Schnecken angeordneten, lösbaren Fenster zu Sichtkontrolle des Endes der Schnecken und des zu verarbeitenden Materials,
- mit einem Auffangbehälter für das zu verarbeitende Material, das überläuft, sowie
- mit mehreren Einlässen zur Einleitung eines Schutzgases bzw. Inertgases in die Entgasungskammer

versehen ist;

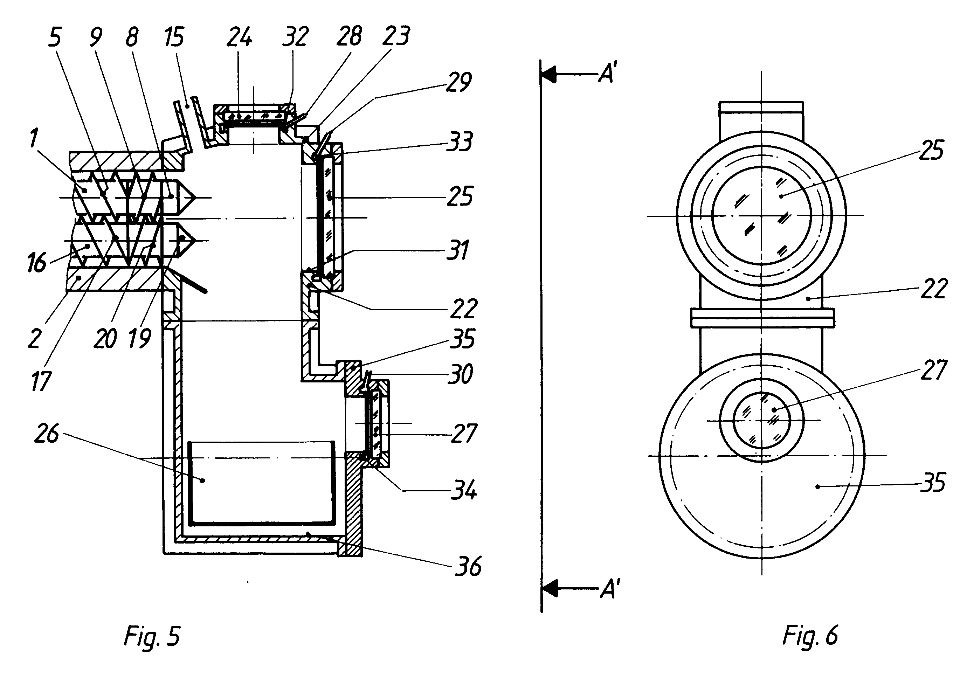

Fig. 6 zeigt eine Ansicht der Entgasungskammer längs der Linie A′-A′ der Fig. 5;

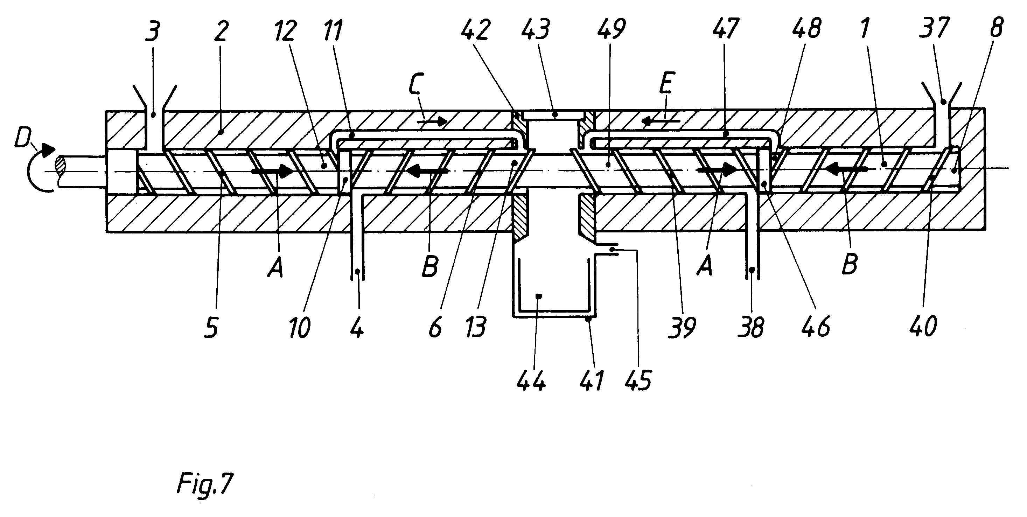

Fig. 7 zeigt schematisch und im Schnitt einen erfindungsgemäßen Einschneckenextruder mit einer Rückwärtsentgasungsanordnung an der Stelle zwischen den Abschnitten des Gewindes der Schnecke, von wo das zu verarbeitende Material über diese Abschnitte in entgegengesetzte Richtungen entlang der Schnecke weggeführt wird; diese Rückwärtsentgasungsanordnung ist mit einem Auffangbehälter für das zu verarbeitende Material, das überläuft, sowie mit einem Fenster zur Sichtkontrolle der Schnecke und des zu verarbeitenden Materials versehen.

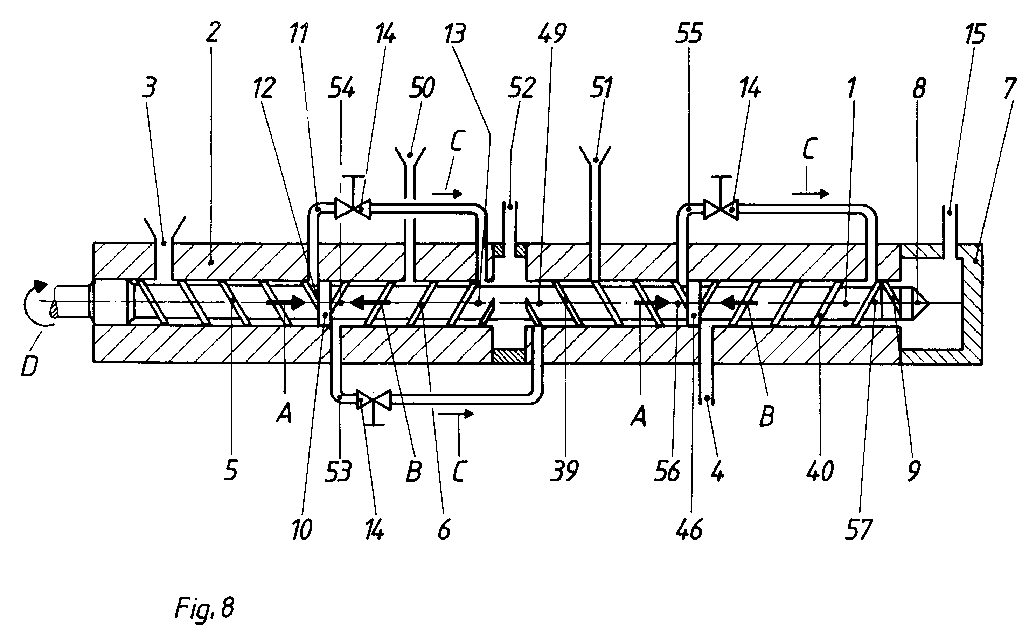

Fig. 8 zeigt schematisch und im Schnitt einen erfindungsgemäßen Einschneckenextruder mit

- einer Rückwärtsentgasungsanordnung am Ende der Schnekke,
- einer Rückwärtsentgasungsanordnung an der Stelle zwischen den Abschnitten des Gewindes der Schnecke, von wo das zu verarbeitende Material über diese Abschnitte in entgegengesetzte Richtungen entlang der Schnecke weggeführt wird, sowie
- (mehreren) Umgehungsleitungen zur Überführung des zu verarbeitenden Materials vom Ende der Abschnitte, über die es in eine Richtung A geführt wird,- an den Anfang der jeweils nachfolgenden Abschnitte, über die es in eine der Richtung A entgegengesetzte Richtung B geführt wird, und einer Umgehungsleitung zur Überführung des zu verarbeitenden Materials vom Ende des Abschnitts, über den es in die Richtung B geführt wird, an den Anfang des nachfolgenden Abschnitts, über den es in die Richtung A geführt wird.

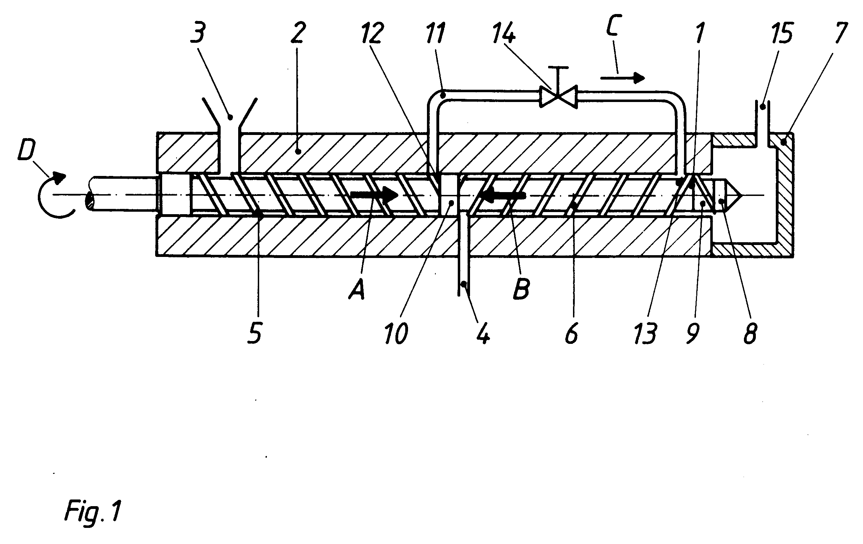

Da der Antrieb und das Getriebe des erfindungsgemäßen Ein-, Zwei- oder Mehrschneckenextruders für die zeichnerische Darstellung der Erfindung nicht unbedingt notwendig sind, wurden sie in den Figuren 1, 2, 3, 4, 7 und 8 nicht angegeben.

In Fig. 1 ist ein erfindungsgemäßer Einschnekkenextruder mit

- einer rotierbaren Schnecke 1,
- einem Gehäuse 2, innerhalb dessen die Schnecke 1 rotieren kann,
- einer Materialeinfüllanordnung 3 und
- einer Materialaustragsanordnung 4

dargestellt.

Der Teil 5 des Gewindes der Schnecke 1 ist rechtsgängig und der Teil 6 des Gewindes der Schnecke 1 ist linksgängig.

Der dargestellte Einschneckenextruder ist als Entgasungsextruder ausgebildet, indem eine Rückwärts-Entgasungsanordnung 7 am Ende 8 der Schnecke 1 vorgesehen ist.

Die Schnecke 1 ist ferner noch an ihrem Ende 8 mit einem kurzen rechtsgängigen Gewindeteil 9 als Überlaufaustragselement versehen; dieses Element beeinflußt den Materialstrom weg vom Schneckenende nicht, sondern damit wird beim Wiederanfahren des Extruders nach einem Stillstand lediglich vermieden, daß während dieses Stillstandes übergelaufenes und eventuell geschädigtes Material wieder in den Materialstrom gelangt.

Zwischen dem rechtsgängigen Gewindeteil 5 (Schneckenabschnitt 5) der Schnecke 1 und dem linksgängigen Gewindeteil 6 (Schneckenabschnitt 6) der Schnecke 1 ist ein Abdichtungselement 10 angeordnet.

Ferner ist eine Umgehungsleitung 11 angeordnet zur Überführung des zu verarbeitenden Materials vom Ende 12 des Abschnitts, über den dieses Material in die Richtung A (zum Ende 8 der Schnecke 1) geführt wird, an den Anfang 13 des Abschnitts, über den dieses Material in die Richtung B (vom Ende 8 der Schnecke 1 weg) geführt wird.

Die Umgehungsleitung 11 verläuft im wesentlichen außerhalb des Gehäuses 2; in der Umgehungsleitung 11 ist ein Drossel-, Dosier- oder Regelorgan 14 angeordnet.

Die Pfeile A und B in Fig. 1 geben die jeweiligen Richtungen an, in die das zu verarbeitende Material über die Schnecke 1 geführt wird; der Pfeil C in Fig. 1 gibt die Richtung an, in die das zu verarbeitende Material durch die Umgehungsleitung 11 geführt wird. Der Pfeil D gibt den Drehsinn (die Drehrichtung) der Schnecke 1 an.

Schließlich ist in Fig. 1 angegeben, daß die Rückwärts-Entgasungsanordnung 7 mit einem Stutzen 15 versehen ist, an dem ein Vakuum angelegt wird zur Ableitung der flüchtigen Bestandteile aus dem zu verarbeitenden Material.

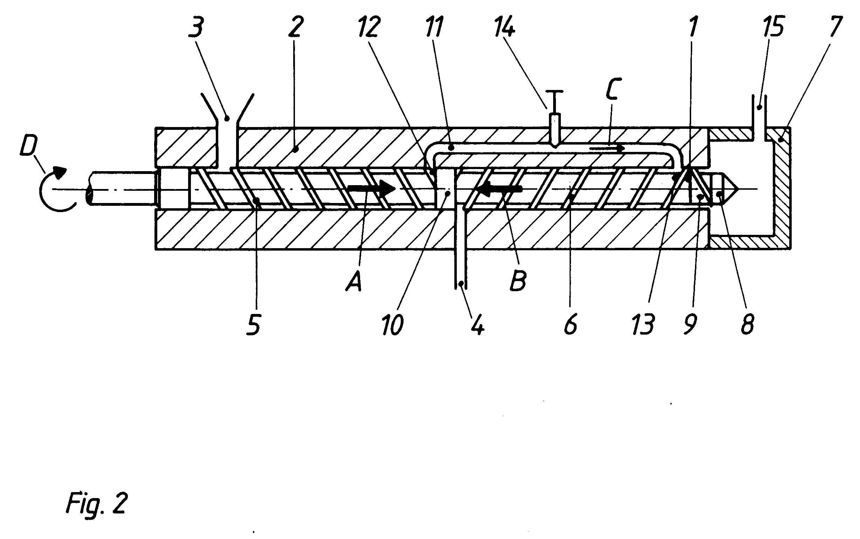

In Fig. 2 ist ein erfindungsgemäßer Einschnekkenextruder wie in Fig. 1 dargestellt, allerdings mit dem Unterschied, daß die Umgehungsleitung 11 durch das Gehäuse 2 verläuft.

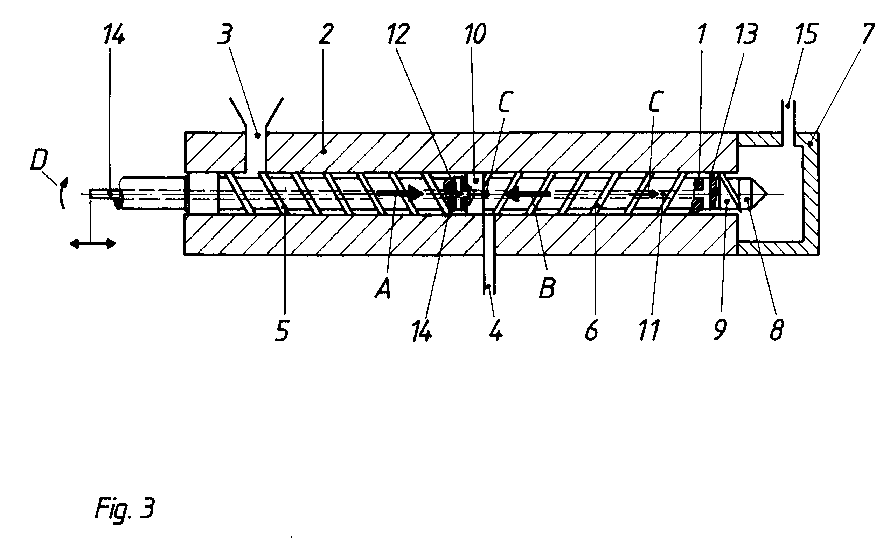

In Fig. 3 ist ein erfindungsgemäßer Einschnekkenextruder wie in Fig. 1 dargestellt, allerdings mit dem Unterschied, daß

- die Umgehungsleitung 11 durch die Schnekke 1 verläuft
und
- das Drossel-, Dosier- oder Regelorgan 14 durch die Schnecke 1 zu bedienen ist.

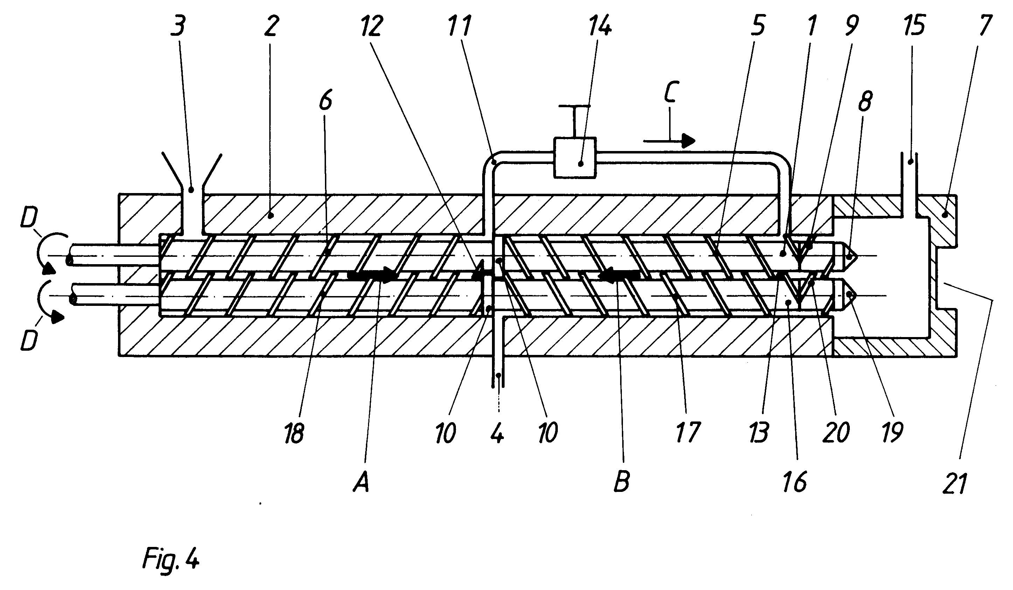

In Fig. 4 ist ein erfindungsgemäßer Zweischneckenextruder mit

- zwei rotierbaren Schnecken 1 und 16,
- einem Gehäuse 2, innerhalb dessen die Schnecken 1 und 16 rotieren können,
- einer Materialeinfüllanordnung 3
und
- einer Materialaustragsanordnung 4
dargestellt.

Der Teil 5 des Gewindes der Schnecke 1 und der Teil 17 des Gewindes der Schnecke 16 sind beide rechtsgängig (vgl. auch Fig. 5). Der Teil 6 des Gewindes der Schnecke 1 und der Teil 18 des Gewindes der Schnecke 16 sind beide linksgängig. Der dargestellte Zweischneckenextruder ist als Entgasungsextruder ausgebildet, indem eine Rückwärts-Entgasungsanordnung 7 am Ende 8 der Schnecke 1 und am Ende 19 der Schnecke 16 vorgesehen ist.

Die Schnecke 1 ist ferner noch an ihrem Ende 8 mit einem kurzen linksgängigen Gewindeteil 9 und die Schnecke 16 ist ebenfalls noch an ihrem Ende 19 mit einem kurzen linksgängigen Gewindeteil 20 versehen (vgl. auch Fig. 5); die beiden Gewindeteile 9 und 20 bilden zusammen ein Überlaufaustragselement (vgl. dazu die entsprechende Erklärung zu Fig. 1).

Zwischen dem linksgängigen Gewindeteil 6 (Schneckenabschnitt 6) der Schnecke 1 und dem rechtsgängigen Gewindeteil 5 (Schneckenabschnitt 5) der Schnecke 1 sowie zwischen dem linksgängigen Gewindeteil 18 (Schneckenabschnitt 18) der Schnecke 16 und dem rechtsgängigen Gewindeteil 17 (Schneckenabschnitt 17) der Schnecke 16 ist jeweils ein Abdichtungselement 10 angeordnet.

Ferner ist eine Umgehungsleitung 11 angeordnet zur Überführung des zu verarbeitenden Materials vom Ende 12 des Abschnitts, über den dieses Material in die Richtung A (zu den Enden 8 und 19 der Schnecken 1 und 16) geführt wird, an den Anfang 13 des Abschnitts, über den dieses Material in die Richtung B (von den Enden 8 und 19 der Schnecken 1 und 16 weg) geführt wird.

Die Umgehungsleitung 11 verläuft im wesentlichen außerhalb des Gehäuses 2; in der Umgehungsleitung 11 ist ein Drossel-, Dosier- oder Regelorgan 14 angeordnet.

Die Pfeile A und B in Fig. 4 geben die jeweiligen Richtungen an, in die das zu verarbeitende Material über die Schnecken 1 und 16 geführt wird; der Pfeil C in Fig. 4 gibt die Richtung an, in die das zu verarbeitende Material durch die Umgehungsleitung 11 geführt wird. Die Pfeile D geben den Drehsinn (die Drehrichtung) der Schnecken 1 und 16 an.

In Fig. 4 ist schließlich noch angegeben, daß die Rückwärts-Entgasungsanordnung 7

- mit einem Stutzen 15 versehen ist, an dem ein Vakuum angelegt wird zur Ableitung der flüchtigen Bestandteile aus dem zu verarbeitenden Material,
sowie
- mit einem Fenster 21 zur Sichtkontrolle der Enden 8 und 19 der Schnecken 1 und 16 und des zu verarbeitenden Materials versehen ist.

In Fig. 5 ist entsprechend der Erfindung eine - an den Enden 8 und 19 der Schnecken 1 und 16 eines erfindungsgemäßen Zweischneckenextruders vorgesehene - Rückwärts-Entgasungskammer 22 dargestellt.

Diese Rückwärts-Entgasungskammer 22 ist

- in ihrer Wandung 23 mit einem Fenster 24 und einem Fenster 25 zur Sichtkontrolle der Schnecken 1 und 16 und des zu verarbeitenden Materials,
- mit einem Auffangbehälter 26 für das zu verarbeitende Material, das überläuft (z. B. bei Stillstand),
- in ihrer Wandung 23 mit einem Fenster 27 zur Sichtkontrolle des Auffangbehälters 26,
- mit einem Stutzen 15, an dem ein Vakuum angelegt wird zur Ableitung der flüchtigen Bestandteile aus dem zu verarbeitenden Material,
und
- mit Einlässen 28, 29 und 30 zur Einleitung eines Schutzgases bzw. Inertgases, wie Stickstoff, in die Rückwärts-Entgasungskammer 22
versehen.

Das Fenster 25 in der Wandung 23 der Rückwärts-Entgasungskammer 22 ist gegenüber den Enden 8 und 19 der Schnecken 1 und 16 angeordnet und ist lösbar; das Fenster 25 ist rund und von einer solchen Größe, daß die Schnekken 1 und 16 durch die Fensteröffnung 31 aus dem erfindungsgemäßen Zweischneckenextruder ausgebaut oder in den erfindungsgemäßen Zweischneckenextruder eingebaut werden können.

Die Einlässe 28, 29 und 30 zur Einleitung eines Schutzgases bzw. Inertgases sind jeweils mit Ringschlitzdüsen 32, 33 und 34 verbunden, so daß das Schutzgas bzw. Inertgas im Bereich der Fenster 24, 25 und 27 eingeblasen wird mit der Folge, daß diese Fenster 24, 25 und 27 nicht beschlagen und auch nach sehr langer Betriebszeit - zur Sichtkontrolle der Enden 8 und 19 der Schnecken 1 und 16 und des zu verarbeitenden Materials resp. des Füllzustandes des Auffangbehälters 26 - noch nutzbar sind.

Die Wandung 23 der Rückwärts-Entgasungskammer 22 ist vorzugsweise so ausgebildet, daß sie zur Vermeidung von Niederschlägen, beispielsweise von Monomeren, beheizbar ist; dieses kann z. B. dadurch geschehen, daß die Wandung 23 doppelwandig ausgeführt ist und mit Dampf beheizt wird.

Der Teil 35 der Wandung 23 der Rückwärts-Entgasungskammer 22, in dem sich das Fenster 27 befindet, ist als - runder - Deckel der lösbar ist, ausgeführt; durch Lösen dieses Deckels 35 kann der Auffangbehälter 26 leicht durch die Deckelöffnung 36, die entsprechend groß gestaltet ist, zur Entleerung entnommen werden.

Die Fig. 6 zeigt eine Ansicht der Rückwärts-Entgasungskammer 22 längs der Linie A'-A' der Fig. 5.

Wie dargestellt sind die Fenster 25 und 27 rund; auch der - lösbare - Deckel 35 ist rund.

In Fig. 7 ist ein erfindungsgemäßer Einschnekkenextruder mit
- einer rotierbaren Schnecke 1
- einem Gehäuse 2, innerhalb dessen die Schnecke 1 rotieren kann,
- einer Materialeinfüllanordnung 3 (zum Einfüllen eines Materials X),
- einer Materialeinfüllanordnung 37 (zum Einfüllen eines Materials X oder eines Materials Y),
- einer Materialaustragsanordnung 4 und
- einer Materialaustragsanordnung 38
dargestellt.

Die Teile 5 und 39 des Gewindes der Schnecke 1 sind rechtsgängig und die Teile 6 und 40 des Gewindes der Schnecke 1 sind linksgängig.

Der dargestellte Einschneckenextruder ist als Entgasungsextruder ausgebildet, indem eine Rückwärts-Entgasungsanordnung 41 an der Stelle zwischen den Abschnitten des Gewindes der Schnecke 1, von wo das zu verarbeitende Material über diese Abschnitte in entgegengesetzte Richtungen A und B entlang der Schnecke 1 weggeführt wird, vorgesehen ist.

Die Rückwärts-Entgasungsanordnung 41 ist
- in ihrer Wandung 42 mit einem Fenster 43 zur Sichtkontrolle der Schnecke 1 und des zu verarbeitenden Materials,
- mit einem Auffangbehälter 44 für das zu verarbeitende Material, das überläuft, sowie
- mit einem Stutzen 45, an dem ein Vakuum angelegt wird zur Ableitung der flüchtigen Bestandteile aus dem zu verarbeitenden Material

versehen.

Zwischen dem rechtsgängigen Gewindeteil 5 (Schneckenabschnitt 5) der Schnecke 1 und dem linksgängigen Gewindeteil 6 (Schneckenabschnitt 6) der Schnecke 1 ist ein Abdichtungselement 10 angeordnet; zwischen dem rechtsgängigen Gewindeteil 39 (Schneckenabschnitt 39) der Schnecke 1 und dem linksgängigen Gewindeteil 40 (Schneckenabschnitt 40) der Schnecke 1 ist ein Abdichtungselement 46 angeordnet.

Ferner ist eine Umgehungsleitung 11 angeordnet zur Überführung des zu verarbeitenden Materials vom Ende 12 des Abschnitts, über den dieses Material in die Richtung A (zum Ende 8 der Schnecke 1) geführt wird, an den Anfang 13 des Abschnitts, über den dieses Material in die Richtung B (vom Ende 8 der Schnecke 1 weg) geführt wird. Außerdem ist eine Umgehungsleitung 47 angeordnet zur Überführung des zu verarbeitenden Materials vom Ende 48 des Abschnitts, über den dieses Material in die Richtung B (vom Ende 8 der Schnecke 1 weg) geführt wird, an den Anfang 49 des Abschnitts, über den dieses Material in die Richtung A (zum Ende 8 der Schnecke 1) geführt wird. Die Umgehungsleitungen 11 und 47 verlaufen durch das Gehäuse 2.

Die Pfeile A und B in Fig. 7 geben die jeweiligen Richtungen an, in die das zu verarbeitende Material über die Schnecke 1 geführt (gefördert) wird; die Pfeile C und E in Fig. 7 geben die jeweiligen Richtungen an, in die das zu verarbeitende Material durch die Umgehungsleitungen 11 und 47 geführt wird. Der Pfeil D gibt den Drehsinn (die Drehrichtung) der Schnecke 1 an.

Schließlich ist in Fig. 8 ein erfindungsgemäßer Einschnekkenextruder mit
- einer rotierenden Schnecke 1,
- einem Gehäuse 2, innerhalb dessen die Schnecke 1 rotieren kann,
- einer Materialeinfüllanordnung 3 (zum Einfüllen eines Materials X),
- einer Materialeinfüllanordnung 50 (zum Einfüllen von beispielsweise Entgasungshilfsmitteln, Polymerzusätzen oder Füllstoffen),
- einer Materialeinfüllanordnung 51 (zum Einfüllen von beispielsweise Entgasungshilfsmitteln, Polymerzusätzen oder Füllstoffen) und
- einer Materialaustragsanordnung 4
dargestellt.

Die Teile 5 und 39 des Gewindes der Schnecke 1 sind rechtsgängig und die Teile 6 und 40 des Gewindes der Schnecke 1 sind linksgängig.

Der dargestellte Einschneckenextruder ist als Entgasungsextruder (mit mehrfacher Entgasung) ausgebildet, indem
- eine Rückwärts-Entgasungsanordnung 7 am Ende 8 der Schnecke 1 vorgesehen ist und

- eine Rückwärts-Entgasungsanordnung 52 (mit Stutzen) an der Stelle zwischen den Abschnitten des Gewindes der Schnecke 1, von wo das zu verarbeitende Material über diese Abschnitte in entgegengesetzte Richtungen A und B entlang der Schnecke 1 weggeführt wird,

vorgesehen ist.

Die Schnecke 1 ist ferner noch an ihrem Ende 8 mit einem kurzen rechtsgängigen Gewindeteil 9 als Überlaufaustragselement versehen (vgl. dazu die entsprechende Erklärung zu Fig. 1).

Zwischen dem rechtsgängigen Gewindeteil 5 (Schneckenabschnitt 5) der Schnecke 1 und dem linksgängigen Gewindeteil 6 (Schneckenabschnitt 6) der Schnecke 1 ist ein Abdichtungselement 10 angeordnet; zwischen dem rechtsgängigen Gewindeteil 39 (Schneckenabschnitt 39) der Schnecke 1 und dem linksgängigen Gewindeteil 40 (Schneckenabschnitt 40) der Schnecke 1 ist ein Abdichtungselement 46 angeordnet.

Ferner ist eine Umgehungsleitung 1 1 angeordnet zur Überführung des zu verarbeitenden Materials vom Ende 12 des Abschnitts, über den dieses Material in die Richtung A (zum Ende 8 der Schnecke 1) geführt wird, an den Anfang 13 des Abschnitts, über den dieses Material in die Richtung B (vom Ende 8 der Schnecke 1 weg) geführt wird. Außerdem ist eine Umgehungsleitung 53 angeordnet zur Überführung des zu verarbeitenden Materials vom Ende 54 des Abschnitts, über den dieses Material in die Richtung B (vom Ende 8 der Schnecke 1 weg) geführt wird, an den Anfang 49 des Abschnitts, über den dieses Material in die Richtung A (zum Ende 8 der Schnecke 1) geführt wird. Schließlich ist eine Umgehungsleitung 55 angeordnet zur Überführung des zu verarbeitenden Materials vom Ende 56 des Abschnitts, über den dieses Material in die Richtung A (zum Ende 8 der Schnecke 1) geführt wird, an den Anfang 57 des Abschnitts, über den dieses Material in die Richtung B (vom Ende 8 der Schnecke 1 weg) geführt wird. Die Umgehungsleitungen 11, 53 und 55 verlaufen im wesentlichen außerhalb des Gehäuses 2; in den Umgehungsleitungen 11, 53 und 55 ist jeweils ein Drossel-, Dosier- oder Regelorgan 14 angeordnet.

Die Pfeile A und B in Fig. 8 geben die jeweiligen Richtungen an, in die das zu verarbeitende Material über die Schnecke 1 geführt wird; die Pfeile C in Fig. 8 geben die Richtung an, in die das zu verarbeitende Material durch die Umgehungsleitungen 11, 53 und 55 geführt wird. Der Pfeil D gibt den Drehsinn (die Drehrichtung) der Schnecke 1 an.

Ferner ist in Fig. 8 angegeben, daß die Rückwärts-Entgasungsanordnung 7 mit einem Stutzen 15 versehen ist, an dem ein Vakuum angelegt wird zur Ableitung der flüchtigen Bestandteile aus dem zu verarbeitenden Material.

Auch an der in Fig. 8 angegebenen Rückwärts-Entgasungsanordnung 52 wird ein Vakuum zur Ableitung der flüchtigen Bestandteile aus dem zu verarbeitenden Material angelegt.

Die Erfindung wird außerdem anhand des nachfolgenden Beispiels erläutert.

Beispiel

Für das Beispiel wurde ein erfindungsgemäßer Zweischnekkenextruder, wie er in Fig. 4 schematisch (im Prinzip) gezeigt ist, eingesetzt, allerdings mit dem Unterschied, daß die Rückwärts-Entgasungsanordnung 7 an den Enden 8 und 19 der Schnecken 1 und 16 die in den Figuren 5 und 6 dargestellte Rückwärts-Entgasungskammer 22 mit u. a. einem Auffangbehälter 26 (für das zu verarbeitende Material das überläuft) war.

Dieser Zweischneckenextruder wurde zum Extrusionsspinnen von Polyamid-66-Filamentgarnen (Nylon-66-Filamentgarnen) eingesetzt.

Der Mengen-Durchsatz an zu verarbeitendem Polyamid-66 des eingesetzten Zweischneckenextruders betrug 80 kg/h.

Die beiden Schnecken 1 und 16 des eingesetzten Zweischnekkenextruders rotierten gleichläufig (gleichsinnig) und waren durchgehend dicht kämmend (dicht ineinandergreifend) angeordnet.

Die erste Verfahrensstufe des eingesetzten Zweischneckenextruders, nämlich der Bereich zwischen der Materialeinfüllanordnung 3 und den Abdichtungselementen 10, diente dem Einzug, der Aufschmelzung und dem Druckaufbau; der Aufbau der beiden Schnecken 1 und 16 in dieser ersten Verfahrensstufe entsprach dem einer üblichen Schnekkenkomposition für die zuvor genannten Aufgaben und umfaßte - betrachtet vom Schneckenanfang in Richtung Schneckenende - resp. Einzugselemente, Knetblöcke und Druckaufbau-Elemente.

Das Gewinde der beiden Schnecken 1 und 16 in der ersten Verfahrensstufe war - betrachtet vom Schneckenanfang in Richtung Schneckenende - linksgängig.

Die zweite Verfahrensstufe des eingesetzten Zweischnekkenextruders, nämlich der Bereich zwischen den Enden 8 und 19 der Schnecken 1 und 16 und den Abdichtungselementen 10, diente dem Überlaufaustrag (Überschußaustrag) der Entgasung und dem Druckaufbau; in dieser zweiten Verfahrensstufe umfaßten die Schnecken 1 und 16 - betrachtet von den Enden 8 und 19 der Schnecken 1 und 16 in Richtung des Schneckenanfangs - resp. übliche, kurzelinksgängige - Schneckenelemente 9 und 20 für den Überlaufaustrag (Überschußaustrag), übliche - rechtsgängige - Schneckenelemente im Entgasungsbereich (Entgasungselemente) zur Förderung der Polyamid-66-Schmelze und übliche - rechtsgängige - Druckaufbauelemente.

Ein nicht vorgetrocknetes (Strang)granulat aus Polyamid-66 (Nylon-66) mit einem Feuchtigkeitsgehalt von 0,45 % (= Lagerfeuchte), einem mittleren Korngewicht von 0,07 g und einem Gehalt an Titandioxid von 0,3 Massen-% (Gewichts-%) wurde über eine - volumetrische - Dosiervorrichtung in die Materialeinfüllanordnung 3 des Zweischneckenextruders gegeben.

In der ersten Verfahrensstufe wurde das zuvor erwähnte Granulat im Bereich der Knetblöcke (Knetelemente) aufgeschmolzen und im Bereich der Druckaufbauelemente auf einen Druck von 55 bar (55•10$^5$ Pascal) komprimiert. Vom Ende der ersten Verfahrensstufe und damit vom Ende der Druckaufbaustufe - in dieser ersten Verfahrensstufe - wurde die Polyamid-66-Schmelze über die Umgehungsleitung 11 an den Anfang der zweiten Verfahrensstufe überführt. Zwischen einem - in der Umgehungsleitung 11 angeordneten - Drosselorgan 14 (Schmelzeventil 14) und der Eintrittsstelle der Polyamid-66-Schmelze in die zweite Verfahrensstufe wurde der Schmelzedruck von 55 bar (55•10$^5$ Pascal) auf 350 mbar (350 Hektopascal) gedrosselt. In der zweiten Verfahrensstufe war über den Stutzen 15 der Rückwärts-Entgasungskammer 22 (vgl. Fig. 5) ein Vakuum mit einem Absolutdruck von 350 mbar (350 Hektopascal) angelegt; dadurch wurde die Polyamid-66-Schmelze im Bereich der Entgasungselemente - wo diese Schmelze nicht komprimiert wurde - von überschüssigem Wasser und von Monomeren befreit. Danach wurde die Polyamid-66-Schmelze im Bereich der Druckaufbau-Elemente auf einen Austragsdruck von 60 bar (60•10$^5$ Pascal) komprimiert. Die so komprimierte Polyamid-66-Schmelze wurde sodann über die Materialaustragsanordnung 4 einer Hochgeschwindigkeits-Filamentspinneinrichtung zugeführt und mit deren Hilfe zu Polyamid-66-Filamentgarnen 22 dtex f 5 versponnen.

Die Filamente und Filamentgarne waren von einwandfreier Qualität, insbesondere

- zeigten die Filamente keine thermisch bedingten Schädigungen, und es entstanden - verglichen mit bekannten Extrusionsspinnverfahren - auch weniger Filamentbrüche;
- hatten die Filamentgarne ausgezeichnete fadenphysikalische Eigenschaften.

Für das Beispiel gilt ferner noch:

Die Temperatur der Polyamid-66-Schmelze am Ausgang (Ende) der ersten Verfahrensstufe betrug 292 ° C.

Die Temperatur der Polyamid-66-Schmelze am Ausgang (Ende) der zweiten Verfahrensstufe betrug 298 ° C.

In der ersten Verfahrensstufe war die Temperatur der Gehäuseheizung (Zylinderheizung) im Aufschmelzbereich 290 ° C und im Druckaufbaubereich 275 ° C.

Die - diphylbeheizte - Umgehungsleitung 11 hatte eine Temperatur von 298 ° C.

In der zweiten Verfahrensstufe wurde die Temperatur mit Hilfe eines Kühlgebläses auf einen Wert zwischen 225 ° C bis 240 ° C abgesenkt - es war nicht notwendig, in der zweiten Verfahrensstufe zu beheizen, da durch die Komprimierung der Polyamid-66-Schmelze im Druckaufbaubereich ausreichend Wärme entstand.

Die Druckdifferenz zwischen der ersten und der zweiten Verfahrensstufe an den Abdichtungselementen 10 wurde mit Hilfe des Schmelzeventils 14 (Drosselorgans 14) in der Umgehungsleitung 11 so eingestellt, daß am Ende der zweiten Verfahrensstufe ein höherer Druck anstand als am Ende der ersten Verfahrensstufe; dadurch wurde verhindert, daß nicht-entgaste Polyamid-66-Schmelze von der ersten Verfahrensstufe an den Abdichtungselementen 10 vorbei und über die Materialaustragsanordnung 4 - der zweiten Verfahrensstufe - in die (Hochgeschwindigkeits-) Filamentspinneinrichtung gelangte (die konstruktiven Bedingungen ermöglichen nämlich keine vollkommene Abdichtung durch die Abdichtungselemente 10 zwischen der ersten Verfahrensstufe und der zweiten Verfahrensstufe bei Druckdifferenz).

Die zuvor erwähnte Druckdifferenz wird jedoch vorzugsweise möglichst klein gehalten, um die geschilderte Leckströmung an den Abdichtungselementen 10 vorbei und damit den im Zweischnekkenextruder zirkulierenden Polyamid-66-Strom ebenfalls möglichst gering zu halten; dadurch wird ein thermischer Abbau des Polyamid-66 durch zu langer Verweilzeit im Extruder vermieden.

Die Rückwärts-Entgasungskammer 22 war - wie die Umgehungsleitung 11 - auf eine Temperatur von 298 0G beheizt. Durch die Einlässe 28, 29 und 30 und über die Ringschlitzdüsen 32, 33 und 34 der Rückwärts-Entgasungskammer 22 wurde Stickstoff im Bereich der Fenster 24, 25 und 27 eingeblasen.

Die Materialeinfüllanordnung 3 war auf eine Temperatur von 90 ° C eingestellt.

Die Drehzahl der Schnecken 1 und 16 schließlich betrug 160 Umdrehungen pro Minute.

**Patentansprüche**

1. Extrusionsverfahren mit Hilfe eines Ein-, Zwei- oder Mehrschneckenextruders, wonach das zu verarbeitende Material in Längsrichtung der Schnecke (1,16) oder Schnecken (1,16) zum Teil in eine Richtung A und zu einem anderen Teil in eine der Richtung A entgegengesetzte Richtung B geführt wird,

wonach ferner das Extrusionsverfahren als Entgasungsextrusionsverfahren durchgeführt wird, wobei die Entgasung als Rückwärtsentgasung

- am Ende (8,19) der Schnecke (1,16) oder Schnecken (1,16), wenn das zu verarbeitende Material von diesem Ende (8,19) entlang der Schnecke (1,16) oder den Schnecken (1,16) weggeführt wird, und/oder

- an der Stelle oder den Stellen zwischen den Abschnitten des Gewindes der Schnecke (1,16) oder Schnecken (1,16), von wo das zu verarbeitende Material über diese Abschnitte in entgegengesetzte Richtungen B und A entlang der Schnecke (1,16) oder den Schnecken (1,16) weggeführt wird,

erfolgt,

wonach außerdem das zu verarbeitende Material

- vom Ende (12,56) des Abschnitts oder der Abschnitte, über den oder die dieses zu verarbeitende Material in eine Richtung A geführt wird, an den Anfang (13,57) des nachfolgenden Abschnitts oder der jeweils nachfolgenden Abschnitte, über den oder die dieses zu verarbeitende Material in eine der Richtung A entgegengesetzte Richtung B geführt wird, und/oder

- vom Ende (48,54) des Abschnitts oder der Abschnitte, über den oder die dieses zu verarbeitende Material in eine Richtung B geführt wird, an den Anfang (49) des nachfolgenden Abschnitts oder der jeweils nachfolgenden Abschnitte, über den oder die dieses zu verarbeitende Material in eine der Richtung B entgegengesetzte Richtung A geführt wird,

überführt wird, wobei der Strom des zu verarbeitenden Materials, das überführt wird, gedrosselt oder geregelt oder dosiert wird,

wonach ferner sich ein Stauungs-, Abdichtungs- oder Drosselungsmittel (10,46) zwischen dem Abschnitt, über den das zu verarbeitende Material in die Richtung A geführt wird, und dem Abschnitt, über den das zu verarbeitende Material in die der Richtung A entgegengesetzte Richtung B geführt wird, befindet

und wonach schließlich der Teil des zu verarbeitenden Materials, der während eines Stillstandes des Extruders entlang des kurzen, unmittelbar an der Rückwärtsentgasung oder den Rückwärtsentgasungen angrenzenden Abschnitts (9,20) der Schnecke (1,16) oder Schnecken (1,16) übergelaufen ist, beim Wiederanfahren des Extruders nach diesem Stillstand in Richtung der Rückwärtsentgasung oder Rückwärtsentgasungen ausgetragen wird.

2. Ein-, Zwei- oder Mehrschneckenextruder mit im wesentlichen

- respektive einer rotierbaren Schnecke (1,16), zwei rotierbaren Schnecken (1,16) oder mehr als zwei rotierbaren Schnecken (1,16),

- einem Gehäuse (2), innerhalb dessen die Schnecke (1,16) rotieren kann oder die Schnecken (1,16) rotieren können,

- einem Antrieb,

- einem Getriebe,

- einer Materialeinfüllanordnung (3,37,50,51) oder mehreren Materialeinfüllanordnungen (3,37,50,51) und

- einer Materialaustragsanordnung (4,38) oder mehreren Materialaustragsanordnungen (4,38),

bei dem das Gewinde der Schnecke (1,16) oder jeder der Schnecken (1,16) zum Teil linksgängig und zum Teil rechtsgängig ist, wobei sich bei zwei oder mehr Schnecken (1,16) - in Richtung der Querachse dieser Schnecken (1,16) gesehen -

- die linksgängigen Abschnitte (6,18) gegenüberliegen und die rechtsgängigen Abschnitte (5,17) gegenüberliegen oder

- die linksgängigen Abschnitte (6,18) gegenüber den rechtsgängigen Abschnitten (5,17) befinden,

wobei der Extruder als Entgasungsextruder ausgebildet ist, indem

- eine Rückwärts-Entgasungsanordnung (7,22) am Ende (8,19) der Schnecke (1,16) oder Schnecken (1,16), wenn das zu verarbeitende Material von diesem Ende (8,19) entlang der Schnecke (1,16) oder den Schnecken (1,16) weggeführt wird, und/oder

- eine Rückwärts-Entgasungsanordnung (41,52) an der Stelle oder den Stellen zwischen den Abschnitten des Gewindes der Schnecke (1,16) oder Schnecken (1,16), von wo das zu verarbeitende Material über diese Abschnitte in entgegengesetzte Richtungen entlang der Schnecke (1,16) oder den Schnecken (1,16) weggeführt wird,

vorgesehen ist oder sind,

wobei außerdem eine Umgehungsleitung (11,47,53,55) angeordnet ist oder mehrere Umgehungsleitungen (11,47,53,55) angeordnet sind zur Überführung des zu verarbeitenden Materials

- vom Ende (12,56) des Abschnitts oder der Abschnitte, über den oder die dieses zu verarbeitende Material in eine Richtung A geführt wird, an den Anfang (13,57) des nachfolgenden Abschnitts oder der jeweils nachfolgenden Abschnitte, über den oder die dieses zu verarbeitende Material in eine der Richtung A entgegengesetzte Richtung B geführt wird,
  und/oder
- vom Ende (48,54) des Abschnitts oder der Abschnitte, über den oder die dieses zu verarbeitende Material in eine Richtung B geführt wird, an den Anfang (49) des nachfolgenden Abschnitts oder der jeweils nachfolgenden Abschnitte, über den oder die dieses zu verarbeitende Material in eine der Richtung B entgegengesetzte Richtung A geführt wird,

wobei die Umgehungsleitung (11,47,53,55) oder die Umgehungsleitungen (11,47,53,55) durch das Gehäuse (2) oder im wesentlichen außerhalb des Gehäuses (2) oder durch die Schnecke (1,16) oder durch die Schnecken (1,16) verläuft bzw. verlaufen und in der Umgehungsleitung (11,47,53,55) ein Drossel-, Regel- oder Dosierorgan (14) angeordnet ist oder in den Umgehungsleitungen (11,47,53,55) Drossel-, Regel- oder Dosierorgane (14) angeordnet sind,

wobei ferner - in Richtung der Längsachse der Schnecke (1,16) oder Schnecken (1,16) gesehen - zwischen dem linksgängigen Schneckenabschnitt (6,18,40) und dem rechtsgängigen Schneckenabschnitt (5,17,39) ein Stauungs-, Abdichtungs- oder Drosselelement (10,46) angeordnet ist oder zwischen den linksgängigen Schneckenabschnitten (6,18,40) und den rechtsgängigen Schneckenabschnitten (5,17,39) Stauungs-, Abdichtungs- oder Drosselelemente (10,46) angeordnet sind

und wobei schließlich der kurze, unmittelbar an der Rückwärts-Entgasungsanordnung (7,22,41,52) oder den Rückwärts-Entgasungsanordnungen (7,22,41,52) angrenzende Abschnitt (9,20) der Schnecke (1,16) oder Schnecken (1,16) eine umgekehrte Gewindegängigkeit aufweist als der Abschnitt der Schnecke (1,16) oder Schnecken (1,16), wodurch das zu verarbeitende Material von der Rückwärts-Entgasungsanordnung (7,22,41,52) oder den Rückwärts-Entgasungsanordnungen (7,22,41,52) weggeführt wird.

3. Ein-, Zwei- oder Mehrschneckenextruder nach Anspruch 2, dadurch gekennzeichnet, daß die Rückwärts-Entgasungsanordnung (7,22,41,52) oder die Rückwärts-Entgasungsanordnungen (7,22,41,52) jeweils

- mit einem Auffangbehälter (26,44) für das zu verarbeitende Material, das überläuft, versehen ist bzw. sind
  und/oder
- mit einem Einlaß (28,29,30) oder mehreren Einlässen (28,29,30) zur Einleitung eines Schutzgases bzw. Inertgases in die Rückwärts-Entgasungsanordnung (7,22,41,52) oder -anordnungen (7,22,41,52) versehen ist bzw. sind.

4. Ein-, Zwei- oder Mehrschneckenextruder nach Anspruch 2 oder 3, dadurch gekennzeichnet, daß die am Ende (8,19) der Schnecke (1,16) oder Schnecken (1,16) vorgesehene Rückwärts-Entgasungsanordnung (7) eine Entgasungskammer (22) ist, die in ihrer Wandung (23) mit einem gegenüber dem Ende (8,19) der Schnecke (1,16) oder Schnecken (1,16) angeordneten Fenster (25) zur Sichtkontrolle des Endes (8,19) der Schnecke (1,16) oder Schnecken (1,16) und des zu verarbeitenden Materials versehen ist, wobei dieses Fenster (25) der Entgasungskammer (22) lösbar ist oder geöffnet werden kann und von einer solchen Größe und Form ist, daß die Schnecke (1,16) oder Schnecken (1,16) durch die Fensteröffnung (31) aus dem Extruder ausgebaut oder in den Extruder eingebaut werden kann bzw. können.

**Claims**

1. An extrusion process by means of a single, double or multiscrew extruder,
   according to which the material to be processed is carried in the longitudinal direction of the screw (1, 16) or screws (1, 16) for a part in a direction A and for another part in a direction B that is opposite to the direction A,
   according to which, moreover, the extrusion process is carried out as a degassing extrusion process, wherein the degassing is effected as a reverse degassing process

   - at the end (8, 19) of the screw (1, 16) or screws (1, 16) if the material to be processed is carried away from this end (8, 19) along the screw (1, 16) or screws (1, 16),
     and/or
   - at the point or points between the sections of the thread of the screw (1, 16) or screws (1, 16) from which the material to be processed is carried away over these sections in opposite directions B and A along the screw (1, 16) or screws (1, 16), according to which, moreover, the material to be processed

- is transferred from the end (12, 56) of the section or sections over which this material to be processed is carried in a direction A, to the start (13, 57) of the following section or the respectively following sections over which this material to be processed is carried in a direction B that is opposite to the direction A, and/or

- is transferred from the end (48, 54) of the section or sections over which this material to be processed is carried in a direction B, to the start (49) of the following section or the respectively following sections over which this material to be processed is carried in a direction A that is opposite to the direction B,

wherein the flow of the material to be processed that is being transferred is restricted, regulated or metered, according to which, moreover, there is located a retaining means, sealing means or restricting means (10, 46) between the section over which the material to be processed is carried in the direction A and the section over which the material to be processed is carried in the direction B that is opposite to the direction A and according to which finally the portion of the material to be processed which during a stoppage of the extruder has overflowed along the short section (9, 20) of the screw (1, 16) or screws (1, 16) directly adjoining the reverse degassing device or reverse degassing devices, is discharged towards the reverse degassing device or reverse degassing devices when the extruder is restarted after this stoppage.

2. A single, double or multiscrew extruder with, in essence,

- a rotatable screw (1, 16), two rotatable screws (1, 16) or more than two rotatable screws (1, 16) respectively,
- a housing (2) within which the screw (1, 16) or screws (1, 16) can rotate,
- a drive,
- a gear unit,
- a material intake arrangement (3, 37, 50, 51) or several material intake arrangements (3, 37, 50, 51)

- a material delivery arrangement (4, 38) or several material delivery arrangements (4, 38)

wherein the thread of the screw (1, 16) or each of the screws (1, 16) is partly left-hand and partly right-hand, in which arrangement, in the case of two or more screws (1, 16) - viewed in the direction of the transverse axis of these screws (1, 16)

- the left-hand sections (6, 18) are disposed opposite each other and the right-hand sections (5, 17) are disposed opposite each other
or
- the left-hand sections (6, 18) are located opposite the right-hand sections (5, 17),

wherein the extruder is designed as a degassing extruder in that provision is made for

- a reverse degassing arrangement (7, 22) at the end (8, 19) of the screw (1, 16) or screws (1, 16), if the material to be processed is carried away from this end (8, 19) along the screw (1, 16) or screws (1, 16),
and/or
- a reverse degassing arrangement (41, 52) at the point or points between the sections of the thread of the screw (1, 16) or screws (1, 16), from which the material to be processed is carried away over these sections in opposite directions along the screw (1, 16) or screws (1, 16),

wherein there is (or are), moreover, arranged a by-pass line (11, 47, 53, 55) or several by-pass lines (11, 47, 53, 55) for transferring the material to be processed

- from the end (12, 56) of the section or sections over which this material to be processed is carried in a direction A to the start (13, 57) of the following section or the respectively following sections over which this material to be processed is carried in a direction B that is opposite to the direction A, and/or
- from the end (48, 54) of the section or sections over which this material to be processed is carried in a direction B to the start (49) of the following section or the respectively following sections over which this material to be processed is carried in a direction A that is opposite to the direction B,

wherein the by-pass line (11, 47, 53, 55) or by-pass lines (11, 47, 53, 55) extends or extend through the housing (2), or substantially outside the housing (2) or through the screw (1, 16) or screws (1, 16), and a restricting element, regulating element or metering element (14) is arranged in the by-pass line (11, 47, 53, 55), or restricting elements, regulating elements or metering elements (14) are arranged in the by-pass lines (11, 47, 53, 55),

wherein, moreover, there is arranged - viewed in the direction of the longitudinal axis of the screw (1, 16) or screws (1, 16) a retaining element, sealing element or restricting element (10, 46) between the lefthand screw section (6, 18, 40) and the righthand screw section (5, 17, 39), or retaining elements, sealing elements or restricting elements (10, 46) are arranged between the lefthand screw sections (6, 18, 40) and the righthand screw sections (5, 17, 39)

and wherein, finally, the short section (9, 20) of the screw (1, 16) or screws (1, 16) directly adjoining the reverse degassing device (7, 22, 41, 52) or reverse degassing devices (7, 22, 41, 52) has an opposite thread direction to that of the section of the screw (1, 16) or screws (1, 16), whereby the material to be processed is carried away from the reverse degassing arrangement (7, 22, 41, 52) or the reverse degassing arrangements (7, 22, 41, 52).

3. A single, double or multiscrew extruder according to claim 2, characterized in that the reverse degassing arrangement (7, 22, 41, 52) or the reverse degassing arrangements (7, 22, 41, 52) is or are respectively provided with
   - a collecting container (26, 44) for the material to be processed which overflows,
   and/or
   - with an inlet (28, 29, 30) or several inlets (28, 29, 30) for introducing a protective gas or inert gas into the reverse degassing arrangement (7, 22, 41, 52) or reverse degassing arrangements (7, 22, 41, 52).

4. A single, double or multiscrew extruder according to claim 2 or 3, characterized in that the reverse degassing arrangement (7) provided at the end (8, 19) of the screw (1, 16) or screws (1, 16) is a degassing chamber (22) that is provided in its wall (23) with a window (25) arranged opposite the end (8, 19) of the screw (1, 16) or screws (1, 16) for a visual control of the end (8, 19) of the screw (1, 16) or screws (1, 16) and of the material to be processed, in which arrangement this window (25) of the degassing chamber (22) is detachable or can be opened, and has such a size and shape that the screw (1, 16) or screws (1, 16) can be removed through the window opening (31) from the extruder or be installed in the extruder therethrough.

**Revendications**

1. Procédé d'extrusion à l'aide d'une extrudeuse à une, deux ou plusieurs vis,

   suivant lequel la matière à travailler est conduite dans le sens longitudinal de la vis (1, 16) ou des vis (1, 16), pour partie dans une direction A et pour une autre partie dans une direction B opposée à la direction A,

   suivant lequel, en outre, l'extrusion est effectuée comme un procédé d'extrusion de dégazage, où le dégazage est réalisé comme rétrodégazage
   - à l'extrémité (8, 19) de la vis (1, 16) ou des vis (1, 16) lorsque la matière à travailler est refoulée depuis cette extrémité (8, 19) le long de la vis (1, 16) ou des vis (1, 16), et/ou
   - à l'endroit ou aux endroits entre les sections du filet de la vis (1, 16) ou des vis (1, 16) à partir duquel ou desquels la matière à travailler est refoulée par ces sections dans les directions opposées A et B le long de la vis (1, 16) ou des vis (1, 16),

   suivant lequel, en outre, la matière à travailler est transférée
   - depuis l'extrémité (12, 56) de la section ou des sections par laquelle ou lesquelles cette matière est conduite dans une direction A jusqu'au début (13, 57) de la section suivante ou de chaque section suivante par laquelle ou lesquelles la matière à travailler est conduite dans une direction A ou dans une direction B opposée, et/ou
   - depuis l'extrémité (48, 54) de la section ou des sections par laquelle ou lesquelles cette matière à travailler est conduite dans une direction B jusqu'au début (49) de la section suivante ou de chacune des sections suivantes par laquelle ou lesquelles cette matière à travailler est conduite dans une direction A opposée à la direction B,

   étant entendu que le courant de la matière à travailler qui est transféré est étranglé ou réglé ou dosé,

   suivant lequel, en outre, un moyen de retenue, d'étanchéité ou d'étranglement (10, 46) se trouve entre la section par laquelle la matière à travailler est conduite dans la direction A et la section par laquelle la matière à travailler est conduite dans la direction B opposée à la direction A,

   et suivant lequel enfin la fraction de la matière à travailler qui, pendant un arrêt de l'extrudeuse, a débordé le long de la courte section (9, 20) de la vis (1, 16) ou des vis (1, 16) immédiatement contiguë au rétrodégazage ou aux rétrodégazages est évacuée dans la direction du rétrodégazage ou des rétrodégazages lors de la remise en marche de l'extrudeuse après l'arrêt.

2. Extrudeuse à une, deux ou plusieurs vis, comprenant essentiellement

- respectivement une vis rotative (1, 16), deux vis rotatives (1, 16) ou plus de deux vis rotatives (1, 16),
- un corps (2) à l'intérieur duquel la vis (1, 16) peut tourner ou les vis (1, 16) peuvent tourner,
- un entraînement,
- une transmission,
- un dispositif d'entrée de matière (3, 37, 50, 51) ou plusieurs dispositifs d'entrée de matière (3, 37, 50, 51), et
- un dispositif de sortie de matière (4, 38) ou plusieurs dispositifs de sortie de matière (4, 38),

dans laquelle le filet de la vis (1, 16) ou de chacune des vis (1, 16) est pour partie à gauche et pour partie à droite, et, dans le cas de deux ou plusieurs vis (1, 16), vu dans le sens de l'axe longitudinal de ces vis (1, 16),

- les sections à gauche (6, 18) sont en face l'une de l'autre et les sections à droite (5, 17) sont en face l'une de l'autre, ou
- les sections à gauche (6, 18) sont en face des sections à droite (5, 17),

l'extrudeuse étant construite comme extrudeuse à dégazage, par le fait

- qu'est prévu un dispositif de rétrodégazage (7, 22) à l'extrémité (8, 19) de la vis (1, 16) ou des vis (1, 16) lorsque la matière à travailler est refoulée depuis cette extrémité (8, 19) le long de la vis (1, 16) ou des vis (1, 16), et/ou
- un dispositif de rétrodégazage (41, 52) à l'endroit ou aux endroits entre les sections du filet de la vis (1, 16) ou des vis (1, 16) à partir duquel ou desquels la matière à travailler est refoulée par ces sections dans des directions opposées le long de la vis (1, 16) ou des vis (1, 16),

dans laquelle, en outre, une conduite de dérivation (11, 47, 53, 55) ou plusieurs conduites de dérivation (11, 47, 53, 55) est ou sont prévues pour transférer la matière à travailler

- depuis une extrémité (12, 56) de la section ou des sections par laquelle ou lesquelles cette matière à travailler est conduite dans une direction A jusqu'au début (13, 57) de la section suivante ou de chaque section suivante par laquelle ou lesquelles cette matière à travailler est conduite dans une direction B opposée à la direction A, et/ou

- depuis l'extrémité (48, 54) de la section ou des sections par laquelle ou lesquelles cette matière à travailler est conduite dans une direction B jusqu'au début (49) de la section suivante ou de chacune des sections suivantes par laquelle ou lesquelles cette matière à travailler est conduite dans une direction A opposée à la direction B,

dans laquelle la conduite de dérivation (11, 47, 53, 55) ou les conduites de dérivation (11, 47, 53, 55) s'étend ou s'étendent à travers le corps (2) ou en substance à l'extérieur du corps (2) ou à travers la vis (1, 16) ou les vis (1, 16) et un dispositif d'étranglement, de réglage ou de dosage est installé dans la conduite de dérivation (11, 47, 53, 55) ou des dispositifs d'étranglement, de réglage ou de dosage sont installés dans les conduites de dérivation (11, 47, 53, 55),

dans laquelle, en outre, vu dans le sens de l'axe longitudinal de la vis (1, 16) ou des vis (1, 16), un élément de retenue, d'étanchéité ou d'étranglement (10, 46) est disposé entre la section de vis à gauche (6, 18, 40) et la section de vis à droite (5, 17, 39) ou des éléments de retenue, d'étanchéité ou d'étranglement sont disposés entre les sections de vis à gauche (6, 18, 40) et les sections de vis à droite (5, 17, 39),

et dans laquelle enfin la courte section (9, 20) de la vis (1, 16) ou des vis (1, 16) immédiatement contiguë au dispositif de rétrodégazage (7, 22, 41, 52) ou aux dispositifs de rétrodégazage (7, 22, 41, 52) présente un pas inverse de la section de la vis (1, 16) ou des vis (1, 16) grâce à quoi la matière à travailler est refoulée à l'écart du dispositif de rétrodégazage (7, 22, 41, 52) ou des dispositifs de rétrodégazage (7, 22, 41, 52).

3. Extrudeuse à une, deux ou plusieurs vis suivant la revendication 2, caractérisée en ce que le dispositif de rétrodégazage (7, 22, 41, 52) ou les dispositifs de rétrodégazage (7, 22, 41, 52) est ou sont munis chacun

- d'un récipient collecteur (26, 44) pour la matière à travailler qui a débordé, et/ou
- d'une entrée (28, 29, 30) ou de plusieurs entrées (28, 29, 30) pour introduire un gaz protecteur ou inerte dans le dispositif de rétrodégazage (7, 22, 41, 52) ou les dispositifs de rétrodégazage (7, 22, 41, 52).

4.  Extrudeuse à une, deux ou plusieurs vis suivant la revendication 2 ou 3, caractérisée en ce que le dispositif de rétrodégazage (7) prévu à l'extrémité (8, 19) de la vis (1, 16) ou des vis (1, 16) est une chambre de dégazage (22) qui est munie, dans sa paroi (23), d'une fenêtre (25) disposée en face de l'extrémité (8, 19) de la vis (1, 16) ou des vis (1, 16) pour le contrôle visuel de l'extrémité (8, 19) de la vis (1, 16) ou des vis (1, 16) et de la matière à travailler, cette fenêtre (25) étant amovible de la chambre de dégazage (22) ou pouvant être ouverte et ayant une dimension et une forme telle que la vis (1, 16) ou les vis (1, 16) puissent être démontées hors de l'extrudeuse ou remontées dans l'extrudeuse à travers l'orifice de la fenêtre (31).

Fig.1

Fig. 2

Fig. 3

Fig. 4

EP 0 343 280 B1

Fig. 6

Fig. 5

Fig.7

EP 0 343 280 B1

Fig. 8

EP 0 343 280 B1